# EUROPÄISCHE PATENTSCHRIFT

(11) **EP 2 838 782 B1**
(45) Veröffentlichungstag und Bekanntmachung des Hinweises auf die Patenterteilung: **21.03.2018**
(21) Anmeldenummer: 13721611.5
(22) Anmeldetag: 18.04.2013
(51) Int. Cl.: B62K 27/12, B60D 1/02, B60D 1/52

(54) **SELBSTVERRIEGELNDE KOMPAKT-KUPPLUNG**
SELF LOCKING COMPACT COUPLING
MEMBRE DE COUPLAGE COMPACTE AUTOVERROUILLANT

(30) Priorität: 18.04.2012 DE 102012103404
(43) Veröffentlichungstag der Anmeldung: 25.02.2015
(60) Teilanmeldung: 17204030.5
(73) Patentinhaber: Croozer GmbH, 50825 Köln (DE)
(72) Erfinder: BOSSEL, Derk, 34289 Zierenberg (DE)
(74) Vertreter: Lenzing Gerber Stute
(86) Internationale Anmeldenummer: PCT/EP2013/058123
(87) Internationale Veröffentlichungsnummer: WO 2013/156578

(56) Entgegenhaltungen:
- EP-A1- 2 386 473
- WO-A1-98/21057
- WO-A1-2010/105286
- CN-Y- 2 294 913
- DE-A1- 4 427 036
- DE-A1- 19 609 910
- DE-U1- 9 308 490
- GB-A- 2 266 869
- US-A- 5 470 088
- US-B1- 7 131 657
- US-E- R E26 806

## Beschreibung

Die Erfindung betrifft eine Kupplung zum Verbinden eines mindestens eine Deichsel aufweisenden Anhängers mit einem nicht motorisierten Fahrzeug oder einem lediglich einen Hilfsantrieb aufweisenden Fahrzeug, insbesondere einem Fahrrad bzw. einem Pedelec, mit zwei zusammenwirkenden und voneinander lösbaren Kupplungsteilen, von denen das eine ortsfest mit dem Fahrzeug und das andere mit der Deichsel verbunden ist.

Kupplungen zum Verbinden der Deichsel eines Fahrradanhängers mit einem Fahrrad sind hinlänglich bekannt. Üblicherweise werden sie entweder zentral unterhalb des Sattels am Fahrradrahmen oder an der Sattelstütze oder seitlich an der Hinterradgabel aus Kettenstrebe und Sitzstrebe bzw. direkt am Hinterrad des Fahrrades befestigt.

So ist aus der DE 299 09 176 U1 eine Anhängerkupplung mit einem an einem Fahrradrahmen unterhalb des Sattels zu befestigenden Kugelkopf bekannt, der in einen am vorderen Ende einer Deichsel vorgesehenen Kupplungskörper eingeführt werden kann. Der Kugelkopf wird in einer Kugelpfanne im Kupplungskörper durch ein sogenanntes Sicherungsrohr gehalten, das sich mithilfe einer sich am Deichselende abstützenden Feder über den Kupplungskörper schiebt. Zum Einsetzen des Kugelkopfes in den Kupplungskörper bzw. zum Lösen des Kugelkopfes aus dem Kupplungskörper ist das Sicherungsrohr entgegen der Federkraft in Richtung zum Fahrradanhänger zurückzuschieben, so dass die Kugelpfanne im Kupplungskörper frei zugänglich ist. Derartige Kupplungen haben unter anderem den grundsätzlichen Nachteil, dass der Gepäckträger des Fahrrads nicht mehr oder zumindest nur sehr beschränkt nutzbar ist, da die Deichsel über den Gepäckträger geführt wird. Ein weiterer grundsätzlicher Nachteil besteht in dem relativ hohen Krafteinleitungspunkt, der beim Schieben des Anhängers das Hinterrad des Fahrrads erheblich entlastet und das Fahrrad auch aushebeln kann.

Einen bedeutsamen praktischen Nachteil haben zudem alle Kupplungen, die am Sattelrohr in Höhe der Sitzstreben anzubringen sind, da durch die Vielzahl von unterschiedlichen Rahmenformen und -bauweisen eine sichere und einfache Montage solcher Kupplungen häufig nicht gelingt.

Aus der DE 196 09 910 A1 ist eine Kupplung zum seitlichen Anhängen eines Fahrradanhängers mit einer Seitendeichsel an einem Fahrradrahmen bekannt, die ein Deichselanschlussteil und ein damit lösbar verbundenes Fahrradanschlussteil aufweist. Das Deichselanschlussteil ist im eingekuppelten Zustand in mindestens drei Drehachsen gelenkig mit dem Fahrradanschlussteil verbunden. Die Kupplung ist als Steckkupplung ausgebildet. Sie weist eine Kupplungsbuchse als erstes, zum Deichselanschlussteil gehöriges Kupplungsteil auf. In der Kupplungsbuchse sind federelastische Zungen mit Rastnasen angeordnet. Damit zusammen wirkt ein Bolzenstück als zweites Kupplungsteil, das Bestandteil des Fahrradanschlussteils ist. Das Bolzenstück kann axial in die Kupplungsbuchse eingeschoben werden, bis dass die Rastfedern in eine umlaufende Nut des Bolzenstücks eingreifen. Das Bolzenstück ist in der Buchse frei drehbar gelagert. Das Fahrradanschlussteil weist zwei weitere Drehgelenke auf, von denen ein erstes an einem abgewinkelten Ende eines an der Kettenstrebe und der Sitzstrebe eines Fahrradrahmens befestigten Anschlussstücks angeordnet ist. Das zweite Drehgelenk sitzt zwischen dem ersten Drehgelenk und der Kupplung und ist mit dem ersten Drehgelenk über ein Versatzstück verbunden. Nachteilig an dieser Kupplung sind der vergleichsweise hohe Aufwand zum Befestigen der Kupplung am Fahrradrahmen und die vergleichsweise hohe, am Fahrrad auch im anhängerfreien Betrieb mitzuführende Masse. Des Weiteren nachteilig sind Drehmomente, die bauartbedingt durch Schub- und Zugbewegungen auf die Befestigungsplatte der fahrradseitigen Kupplung wirken, welche in ungünstigen Fällen zu einem Lösen der Befestigungsmittel führen können, welche die Befestigungsplatte am Fahrrad fixieren.

Aus der US 6,099,088 ist eine weitere Anhängerkupplung für einen Fahrradanhänger bekannt. Sie weist ein am Ende einer Schnellspannnabe angeordnetes, am Schnellspanner fest verbundenes erstes Kupplungsbefestigungsteil, das mit einem Wälzlager auf dem ersten Kupplungsbefestigungsteil gelagert und um die Längsachse der Nabe rotierbar ist, sowie ein darauf angeordnetes zweites Kupplungsbefestigungsteil auf, welches eine Aufnahme für einen Steckbolzen hat. Auch das kupplungsseitige Ende der Deichsel weist eine damit zusammenwirkende Aufnahme für den Steckbolzen auf. Zur Verbindung der Deichsel mit dem zweiten Kupplungsbefestigungsteil wird der Bolzen radial zur Nabenachse in die Aufnahmen eingesetzt. Die Deichsel ist dann um die Bolzenachse herum verschwenkbar. Der Bolzen wird in der Aufnahme mit Hilfe einer Sicherungsfeder gesichert. Die Kupplung ist ausschließlich für Schnellspannaben konzipiert und nicht für Fahrräder mit Vollachsen einsetzbar.

Aus der CN 2 294 913 Y ist eine Kupplung mit den Merkmalen des Oberbegriffs von Anspruch 1 bekannt. Sie weist einen Bolzen mit zylindrischer Mantelfläche sowie einer auf den Bolzen aufsteckbaren und den Bolzen zumindest teilweise umgreifenden Buchse als zusammenwirkende Kupplungsteile auf, wobei die Buchse mindestens eine Öffnung zum Einsetzen des Bolzens aufweist und die miteinander verbundenen Kupplungsteile um ihre gemeinsame Längsachse herum relativ zueinander drehbar sind und als Drehgelenk mit einem Freiheitsgrad wirken. Als Verriegelungsmittel weisen die Kupplungsteile einen Schieber, der an der Buchse federnd gelagert ist, sowie eine am Bolzen ausgebildete umlaufenden Nut auf, wobei eine Stirnseite des Bolzens kegelförmig ausgebildet ist, so dass der Schieber beim Einsetzen des Bolzens in die Buchse zunächst von der Stirnseite des Bolzens entgegen einer Federkraft bei Seite geschoben wird und dann aufgrund der Federkraft in der umlaufenden Nut einrastet.
Aus der US Re 26,806 E ist außerdem eine Kupplung bekannt, bei der auf einen an einem Fahrrad montierten, querstehenden Bolzen ein Buchsenstück aufgesetzt wird. Das Buchsenstück wird auf dem Bolzen durch ein zweites Buchsenstück gesichert. Hierfür sind im zweiten Buchsenstück und im Bolzen Bohrungen vorgesehen sind, in die ein Sicherungssplint eingesetzt werden kann.
Bei beiden der zuletzt genannten Kupplungen sind deichselseitig zwei weitere Drehgelenke zum Erzeugen zweier weiterer Freiheitsgrade vorgesehen.
Die Aufgabe der Erfindung besteht darin, eine Kupplung der eingangs genannten Art zur Verfügung zu stellen, die die oben genannten Nachteile nicht aufweist.
Diese Aufgabe wird bei einer Kupplung der eingangs genannten Art mit den Merkmalen des Anspruchs 1 gelöst.
Unter einem ortsfesten Kupplungsteil wird hier und im Folgenden ein solches verstanden, das seine Position gegenüber dem Fahrzeugrahmen nicht verändert. Hierdurch wird jedoch nicht ausgeschlossen, dass der ortsfeste Kupplungsteil um seine Längsachse drehbar gelagert sein kann.
Unter einer Buchse wird hier und im Folgenden ein Bauteil verstanden, dass geeignet ist, den Bolzen im gekoppelten Zustand in Bezug auf die Lage seiner Längsachse sicher aufzunehmen. Sie kann den Bolzen teilweise ummanteln, aber auch lediglich aus zwei oder mehreren, axial zueinander beabstandeten, ringförmigen Einfassungen für den Bolzen bestehen. Sie kann so ausgebildet sein, dass darin auch Verriegelungsmittel zum Sichern des Bolzens in der Buchse untergebracht sind.

Das ortsfeste Kupplungsteil kann sowohl der Bolzen als auch die Buchse zur Aufnahme des Bolzens sein. Bei beiden Elementen besteht der besondere Vorteil darin, dass sie auf einfache Weise beispielsweise im Bereich des Ausfallendes eines Fahrradrahmens oder am Ende einer Radachse befestigt, beispielsweise verschraubt, werden können, sofern sie entsprechende Außen- oder Innengewinde haben, die wahlweise mit dem Gewinde am Ende einer Radachse oder einer am Ausfallende gegengelagerten Schraube zusammenwirken.

Der Bolzen der erfindungsgemäßen Kupplung kann, je nach Ausführungsform, beispielsweise axial oder radial zur Längsachse der Buchse in diese eingesetzt werden. Dabei sorgen in einer bevorzugten Ausführungsform die Verriegelungsmittel dafür, dass der Bolzen automatisch in der Buchse sicher festgehalten wird, sobald er beim Einsetzen eine bestimmte Position erreicht hat. Ist der Bolzen in die Buchse eingesetzt und mit den Verriegelungsmitteln verriegelt, sind Bolzen und Buchse um ihre Längsachse herum relativ beweglich, so dass der durch Bolzen und Buchse gebildete Teil der Kupplung einen Freiheitsgrad hat.

Durch ein weiteres, deichselseitiges Gelenk, das insbesondere ein kardanisches Gelenk sein kann, wird gewährleistet, dass alle Bewegungen der Deichsel von der Kupplung aufgenommen werden können.

Ein wesentlicher Vorteil der erfindungsgemäßen Kupplung besteht darin, dass nur ein Minimum an Kupplungsteilen - in bevorzugter Ausführung nur ein einziges Bauteil - am Fahrzeug verbleibt, wenn die Kupplung einmal gelöst ist. So erfolgt die Auftrennung der Kupplung an der Stelle der Bereitstellung ihres - vom Fahrzeug aus gesehen - ersten Freiheitsgrades. Dies ist insbesondere ein großer Vorteil gegenüber der aus der DE 196 09 910 A1 bekannten Kupplung, bei der nahezu alle für die mit der Kupplung bereitgestellten drei Freiheitsgrade notwendigen Kupplungsteile am Fahrzeug verbleiben, selbst wenn die Kupplung gelöst ist. Dies ist aber auch ein Vorteil gegenüber der aus der US 6,099,008 bekannten Kupplung, bei der die Auftrennung der Kupplung an ihrem - vom Fahrrad aus gezählt - zweiten Freiheitsgrad erfolgt.

Vorzugsweise wird das fahrzeugseitige Kupplungsteil axial zur Achse der Radnabe angeordnet, und es weist darüber hinaus bevorzugt Mittel zu seiner Befestigung am Ende einer Radnabe auf. Diese Mittel können vorteilhafterweise darin bestehen, dass die Buchse ein Innengewinde oder der Bolzen in Richtung seiner Längsachse eine Gewindebohrung aufweist, mit dem die Buchse bzw. der Bolzen auf ein Ende der Radnabe oder eine am Fahrzeug gegengelagerte Verbindungsschraube aufgeschraubt werden kann. Hier wird ein weiterer grundsätzlicher Vorteil der Erfindung deutlich. So kann durch die relative Beweglichkeit zwischen Bolzen und Buchse kein Drehmoment auf das fahrzeugseitige Kupplungsteil aufgebracht werden. Deswegen kann es wahlweise neben einer Radmutter auf das Ende der Radachse aufgeschraubt werden oder sogar die Funktion des Radbefestigungsmittels, sei es als Radmutter bei Vollachsen oder als Gegenmutter bei Schnellspannachsen, übernehmen.

Weist das fahrzeugseitige Kupplungselement eine ausreichende Dicke auf, kann es vergleichsweise kurz ausgeführt werden, so dass es kaum über das Ausfallende des Fahrzeugrahmens auskragt.

Insbesondere bei erfindungsgemäßen Kupplungsteilen, die axial ineinander zu stecken sind, ist es von Vorteil, wenn der Bolzen spielfrei in der Buchse sitzt, da damit eine Kraftübertragung zwischen Bolzen und Buchse über eine größtmögliche Kontaktfläche erfolgt.

Als Befestigungsmittel für eine Vollachse bzw. Gegenmutter eines Schnellspanners kann der Bolzen zudem weitere vorteilhafte Ausgestaltungen aufweisen. So kann der Bolzen z.B. auf dem von der Buchse umhüllten Zylinderstück mindestens zwei zueinander parallele Flächen aufweisen, welche eine Ansatzfläche für ein Werkzeug bilden, mit denen der Bolzen aufgeschraubt werden kann. Im verriegelten Zustand ist es danach nicht mehr möglich, den Bolzen abzuschrauben, wodurch eine einfache, aber wirksame Diebstahlsicherung erreicht wird. Auch kann der Bolzen an der Stirnfläche, an der sich das Innengewinde befindet, einen zylindrischen Abschnitt aufweisen, der als Abstandhalter fungiert, wenn die Radachse sich in sogenannten 3-D Ausfallenden befindet, welche eine Vertiefung aufweisen, in die das Radbefestigungsmittel hineinragt. So ist gewährleistet, dass der Bolzen sicher und beschädigungsfrei auch in räumlich beengten Verhältnisses montiert werden kann.

Auch vorteilhaft kann eine spezielle Ausgestaltung der den Bolzen aufnehmenden Stirnfläche der Buchse sein, bei der sie eine axial ausgeformte Manschette aufweist, die im aufgesteckten und verriegelten Zustand die Montageflächen des Bolzens soweit überdeckt, dass der Ansatz eines Werkzeuges zum Demontieren des Bolzens nicht mehr möglich ist.

Die Kupplungsteile sind im gekoppelten Zustand axial zueinander fixiert. Dies wird bei einer bevorzugten Ausgestaltung der Erfindung dadurch bewirkt, dass eines der Kupplungsteile mindestens eine zumindest teilweise umlaufende Schulter oder Nut aufweist, die mindestens eine erste axial wirkende Lagerfläche bildet, und am anderen Kupplungsteil ein mit der ersten axial wirkenden Lagerfläche zusammenwirkendes Gegenlager vorgesehen ist. Als Gegenlager kommt insbesondere auch ein mit dem anderen Kupplungsteil zusammenwirkenden Element, beispielsweise ein Verriegelungsmittel in Betracht, das vorzugsweise nicht nur eine axial wirkende Lagerfläche sondern mindestens zwei axial wirkende Lagerflächen als Gegenlager bildet und damit in Zusammenwirken mit entsprechenden axial wirkenden Lagerflächen des einen Kupplungsteils eine Bewegung des Bolzens in der Buchse in beide axiale Richtungen sperrt. Es ist auf diese Weise möglich, beide Kupplungsteile axial in beide Richtungen zu fixieren. Die Lagerflächen liegen dabei vorzugsweise innerhalb der Buchse oder Bolzenführung, wenn der Bolzen in die Buchse bzw. Bolzenführung eingesteckt ist, so dass eine kompakte Bauweise der Kupplung möglich ist.

Bei derkonstruktiv einfachen erfindungsgemäßen Lösung ist in der Buchse für einen Sicherungsstift eine Führung derart vorgesehen, dass der in der Führung sitzende Sicherungsstift in eine Nut eines in die Buchse eingesetzten Bolzens eingreift und ihn als Gegenlager gegen ein axiales Herausrutschen aus der Buchse sichert. Dabei kann die Buchse in einer darüber hinaus bevorzugten Ausführungsform seitensymmetrisch aufgebaut sein, indem die Führung für den Sicherungsstift mittig in der Buchse angeordnet ist. Damit ist ein Aufstecken der Buchse auf den Bolzen von beiden Stirnseiten der Buchse her möglich.

In einer bevorzugten Ausbildung können die Verriegelungsmittel buchsenseitig ein vorgespanntes Rastelement aufweisen, das ausgelöst wird, sobald der Bolzen in die Buchse eingesetzt ist. Das Rastelement kann beispielsweise ein Bügel sein, der zunächst den Weg zum Einsetzen des Bolzens in die Buchse frei gibt und dann nach Auslösen den Bolzen umgreift, ähnlich wie der Riegel eines Kofferraumschlosses eines PKWs. In einem solchen Fall kann es zudem vorteilhaft sein, wenn der Bolzen an seinem Ende statt einer Nut eine Schulter aufweist, die in eine entsprechende Ausnehmung in der Buchse eingreift. In diesem Fall ist die Buchse so auszugestalten, dass die Bolzen quer zur Längsachse der Buchse in diese eingesetzt werden kann.

Insbesondere dann, wenn der Bolzen ortsfest mit dem Fahrzeug verbunden ist, ist die Buchse an mindestens einer ihrer Stirnseiten zumindest teilweise offen, damit der Bolzen in die Buchse eingesetzt werden kann. Dabei wird der Bolzen vorzugsweise axial in die Buchse eingesetzt. Je nach Ausführungsform der Kupplung kann es aber ebenso bevorzugt sein, wenn die Buchse eine seitliche Ausnehmung aufweist, durch die der Bolzen quer zur Längsachse der Buchse in diese einsetzbar ist. Wenn die Buchse ortsfest mit dem Fahrzeug verbunden ist, kann auf eine stirnseitige Öffnung der Buchse verzichtet werden, wenn der Bolzen nicht stirnseitig, sondern an seiner Mantelfläche mit der Deichsel verbunden ist und die Verriegelungsmittel dergestalt sind, dass sie den Bolzen sicher gegen ein Herausrutschen aus der seitlichen Öffnung der Buchse halten.

Natürlich weist das deichselseitige Kupplungsteil vorzugsweise ein oder mehrere weitere Gelenkmittel auf, so dass der Freiheitsgrad der Kupplung größer 1 ist. So kann beispielsweise ein mit dem deichselseitigen Kupplungsteil verbundenes und insbesondere daran angeordnetes erstes Drehgelenk vorgesehen sein, dessen Drehachse im Wesentlichen orthogonal zur Längsachse des Bolzens verläuft. In einer vereinfachten Bauweise ist dieses erste Drehgelenk so ausgestaltet, dass die in ihm enthaltene Buchse zur Aufnahme des Bolzens seitensymmetrisch aufgebaut ist, indem der Verriegelungsbolzen mittig in der Buchse angeordnet ist. In Ergänzung hierzu kann ein weiteres mit der Buchse verbundenes, insbesondere am ersten Drehgelenk angrenzendes zweites Drehgelenk vorgesehen sein, dessen Drehachse orthogonal zu der des ersten Drehgelenks und der Längsachse des Bolzens verläuft. Dabei ergibt sich eine besonders kompakte Bauform, wenn die Drehachse des ersten Drehgelenks die Längsachse des Bolzens schneidet.

Alternativ oder in Ergänzung zu dem einen oder den mehreren beschriebenen nachfolgenden Drehgelenken des deichselseitigen Kupplungsteils kann ein quer zur Längsachse der Kupplungsteile angeordnetes elastisches oder federelastisches Verbindungselement zwischen Deichsel und deichselseitigem Kupplungsteil, insbesondere eine Spiralfeder und/oder ein Elastomergelenk vorgesehen sein.

In noch einer bevorzugten Ausgestaltung weist die erfindungsgemäße Kupplung ein Gehäuse auf, in das die Buchse eingesetzt ist und an dem das erste Drehgelenk und/oder das Verbindungselement ausgebildet sind.

Außerdem kann im Gehäuse in einer weiteren bevorzugten Ausführungsform ein abschließbares Schloss zum Blockieren des Entriegelungsmittels oder zum Sichern beider Kupplungsteile im Gehäuse als Diebstahlschutz vorgesehen sein.

Um eine äußerst einfache Bedienung der erfindungsgemäßen Kupplung zu gewährleisten, weisen die Entriegelungsmittel mindestens einen Betätigungsknopf auf, mit dem die automatisch eingerasteten Verriegelungsmittel, insbesondere durch eine einmalige Betätigung, voneinander gelöst werden, so dass die Kupplungsmittel voneinander getrennt werden können. Hier ist beispielsweise ein Mechanismus verwendbar, bei dem durch Betätigen des Druckknopfes ein oder mehrere Stifte in die Verriegelungsmittel eingreifen und sie entgegen ihrer Wirkrichtung bewegen, so dass der Bolzen in der Buchse wieder freigegeben wird.

Die erfindungsgemäße Kupplung ist insbesondere zum Anhängen von Fahrradanhängern an Fahrräder, auch solche mit (elektrischem) Hilfsantrieb, geeignet. Bevorzugt sind die beiden voneinander lösbaren Kupplungsteile wahlweise parallel zur Längsachse einer hinteren Radnabe des Fahrzeugs oder fluchtend mit der Längsachse dieser Radnabe angeordnet.

Im Folgenden wird die Erfindung anhand von Figuren, in denen verschiedene bevorzugte Ausführungsbeispiele der Erfindung ganz oder teilweise dargestellt sind, näher erläutert. Es zeigen:
- Fig. 1: eine Deichsel mit einer an einem ihrer Enden angeordneten, erfindungsgemäßen Kupplung mit einer symmetrisch ausgeführten Buchse in perspektivischer Ansicht;
- Fig. 2: die erfindungsgemäße Kupplung der in Figur 1 dargestellten Deichsel in anderer perspektivischer Ansicht;
- Fig. 3: die in den Figuren 1 und 2 dargestellte erfindungsgemäße Kupplung ohne Gehäusemantel in weiterer perspektivischer Ansicht; und
- Fig. 4: die Kupplung in der in Figur 3 gezeigten perspektivischen Ansicht mit transparenter Darstellung des Mantels eines Folgegelenks.

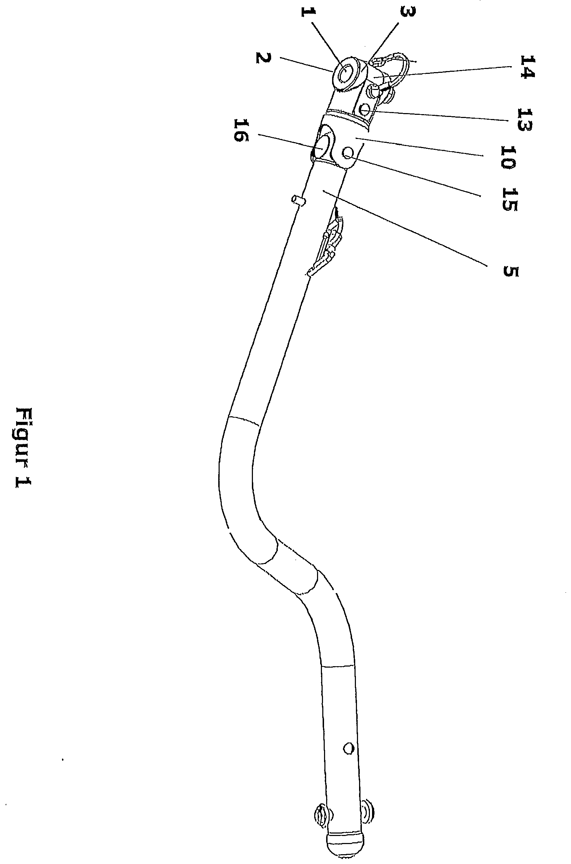

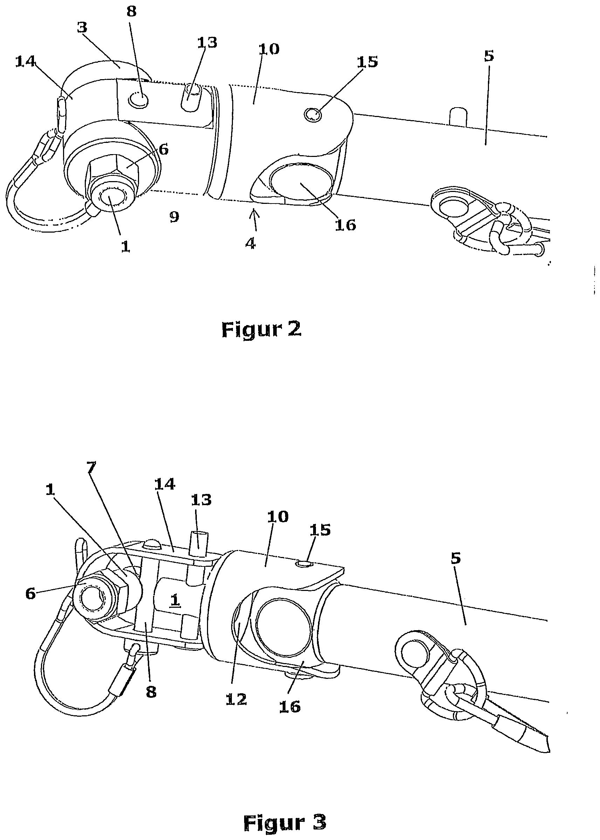

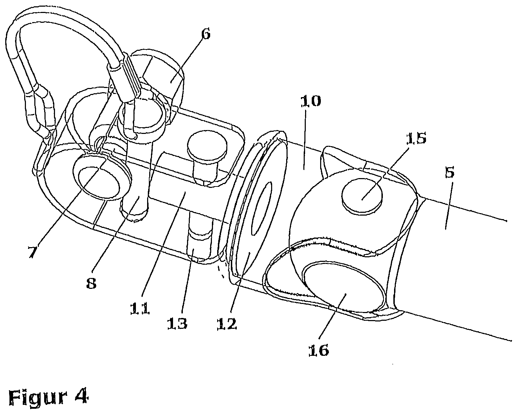

Die Figuren 1 bis 4 zeigen eine erste, konstruktiv einfache Ausführungsform der erfindungsgemäßen Kupplung. Während Figur 1 eine Gesamtansicht einer Deichsel mit einer an ihrem Kopf angeordneten Kupplung in einer Perspektive zeigt, zeigt Figur 2 den symmetrisch aufgebauten Kopf der Deichsel mit der Kupplung in anderer Perspektive. Figur 3 zeigt den Deichselkopf samt Kupplung in einer weiteren Perspektive, wobei das Gehäuse der Kupplung nicht dargestellt ist, um die Anordnung und Ausgestaltung der Freiheitsgrade bzw. der zu ihrer Realisierung erforderlichen Drehgelenke besser darstellen zu können. Schließlich zeigt Figur 4 den Deichselkopf samt Kupplung in noch einer anderen Perspektive. Hierin wurde zur besseren Darstellung des Aufbaus der Kupplung nur das Gehäuse weggelassen und der Mantel eines Folgegelenks der Kupplung transparent dargestellt.

Die erfindungsgemäße Ausführungsform weist einen fahrzeugseitigen, im Wesentlichen rotationssymmetrischen Bolzen 1 auf, der in einer deichselseitigen Buchse 2 sitzt. Die Buchse 2 ist Bestandteil eines Gehäuses 3. Am Gehäuse schließt sich quer zur Längsachse des Bolzens 1 eine kardanisch wirkende Gelenkkombination 4 an, über die das Gehäuse 3 mit der Deichsel 5 verbunden ist.

Buchse 2 und Bolzen 1 bilden ein Drehgelenk, dessen Drehachse vorzugsweise fluchtend zu einer hinteren Radachse des Fahrzeugs angeordnet wird und damit in der Horizontalen verläuft. Die Drehachsen der sich am Gehäuse anschließenden Gelenkkombination 4 verlaufen zueinander und zur Längsachse der Buchse 2 orthogonal, so dass der Freiheitsgrad der Kupplung drei ist.

Wie insbesondere in den Figuren 2 bis 4 zu sehen ist, ist der Bolzen 1 an seinem dem Fahrzeug zugewandten Ende als Mutter 6 ausgebildet. Damit wird der Bolzen 1 auf das Ende einer Achse eines hinteren Rades eines Fahrzeugs, insbesondere auf die Hinterradachse eines Fahrrads, aufgeschraubt und kann sogar eine herkömmliche Radmutter ersetzen.

In einem zentralen Bereich des Bolzens 1 ist eine umlaufende Nut 7 vorgesehen. In diese Nut greift ein Sicherungsstift 8 ein, der in das Gehäuse 3 lösbar eingesteckt ist und den Bolzen 1 gegen ein axiales Verschieben sichert. Zum Einstecken des Sicherungsstiftes sind im Gehäuse miteinander fluchtende Bohrungen vorgesehen, und die Buchse 2 weist im Bereich des Eingriffs des Sicherungsstiftes 8 in die Nut 7 des Bolzens 1 eine Öffnung auf. Der Kopf des Sicherungsstiftes 8 ist mit einem Band am Gehäuse 3 befestigt.

Der Sicherungsstift 8 ist in einem sich quer zur Längsachse des Bolzens 1 erstreckenden Teils 9 des Gehäuses 3 gehalten. Das stirnseitige Ende dieses Gehäuseteils 9 ist als Lochscheibe ausgebildet, ebenso wie die daran anliegende Stirnseite eines sich anschließenden Mantelteils 10 für die Gelenkkombination 4. Durch die Lochscheiben greift ein weiterer Bolzen 11, an dessen einem Ende eine Scheibe 12a angeordnet ist, die an der Innenseite der Lochscheibe des Mantelteils 10 anliegt. Der Bolzen 11 ist im Gehäuse 3 durch einen darin eingelassenen Stift 13, der durch den Bolzen 11 hindurch gesteckt ist, gesichert. Mit dieser Anordnung liegt das Mantelteil 10 an dem Gehäuse 3 an und ist gegenüber dem Gehäuse 3 um eine durch den Bolzen 11 definierte Rotationsachse drehbar, so dass die Kupplung hierdurch einen zweiten Freiheitsgrad erhält. Die Rotationsachse des Mantelteils 10 verläuft orthogonal zur Längsachse des Bolzens 1 und schneidet diese.

Das Gehäuse 3, das überwiegend aus einem Kunststoff besteht, ist durch einen metallischen, U-förmigen Bügel 14 verstärkt, der den die Buchse 2 aufnehmenden Gehäuseteil und den sich seitlich anschließenden Gehäuseteil 9 einfasst und insbesondere die für den Sicherungsstift 8 und den Stift 13 vorgesehenen Bohrungen im Gehäuse verstärkt und die Stifte gegen ein Ausbrechen aus dem Gehäuse sichert.

Das Mantelteil 10 nimmt das Angelstück 15 eines weiteren Drehgelenks auf, dessen Gegenstück vom Deichselkopf 16 gebildet wird. Die Drehachse des Angelstücks 15 verläuft orthogonal zur Längsachse des Bolzens 1 und zur durch den Bolzen 11 definierte Rotationsachse. Damit hat die Kupplung einen dritten Freiheitsgrad.

## Patentansprüche

1. Kupplung zum Verbinden eines mindestens eine Deichsel aufweisenden zweispurigen Anhängers mit einem nicht motorisierten Fahrzeug oder einem lediglich einen Hilfsantrieb aufweisenden Fahrzeug, insbesondere einem Fahrrad, mit zwei zusammenwirkenden und voneinander lösbaren Kupplungsteilen, von denen das eine ortsfest mit dem Fahrzeug und das andere mit der Deichsel zu verbinden ist, und von denen das eine ein Bolzen (1, 24) mit zylindrischer Mantelfläche und das andere eine auf den Bolzen (1, 24) aufsteckbare und den Bolzen (1, 24) zumindest teilweise umgreifende Buchse (2, 25) oder Bolzenführung ist, wobei der Bolzen mindestens eine zumindest teilweise umlaufende Nut (7, 29) aufweist, die mindestens eine erste axial wirkende Lagerfläche bildet, an der Buchse (2, 25) oder der Bolzenführung ein mit der ersten axial wirkenden Lagerfläche zusammenwirkendes Gegenlager vorgesehen ist, die Buchse (2, 25) oder Bolzenführung mindestens eine Öffnung zum Einsetzen des Bolzens (1, 24) aufweist und die miteinander verbundenen Kupplungsteile um die Längsachse des Bolzens herum relativ zueinander drehbar sind und als Drehgelenk mit einem Freiheitsgrad wirken, wobei die Kupplungsteile Verriegelungsmittel aufweisen, mit denen die Kupplungsteile sicher miteinander verbunden werden können, und wobei deichselseitig ein oder mehrere weitere Gelenkmittel vorgesehen sind, durch welche die Kupplung mindestens einen weiteren Freiheitsgrad erhält, **gekennzeichnet durch** eine Führung in der Buchse (2, 25) für einen Sicherungsstift (8) derart, dass der in der Führung sitzende Sicherungsstift (8) in die Nut (7) des in die Buchse (2) eingesetzten Bolzens (1) eingreift und ihn als Gegenlager gegen ein axiales Herausrutschen aus der Buchse sichert.

2. Kupplung nach Anspruch 1, **dadurch gekennzeichnet, dass** der Sicherungsstift (8) mindestens zwei axial wirkende Gegenlagerflächen bildet und eine Bewegung des Bolzens in der Buchse in beide axiale Richtungen sperrt.

3. Kupplung nach Anspruch 1 oder 2, **dadurch gekennzeichnet, dass** sich der Bolzen (24) an seinem in die Buchse (25) einzusteckenden Ende (28) insbesondere in einem Winkel von etwa 45° verjüngt.

4. Kupplung nach einem der Ansprüche 1 bis 3, **dadurch gekennzeichnet, dass** die Verriegelungsmittel buchsenseitig ein vorgespanntes Rastelement aufweisen, das ausgelöst wird, sobald der Bolzen in die Buchse eingesetzt ist.

5. Kupplung nach Anspruch 4, **dadurch gekennzeichnet, dass** Entriegelungsmittel vorgesehen sind, um die Verriegelungsmittel zu entriegeln, so dass die Kupplungsteile voneinander gelöst werden können, wobei vorzugsweise die Entriegelungsmittel mindestens einen Betätigungsknopf aufweisen, mit dem die eingerasteten Verriegelungsmittel insbesondere durch eine einmalige Betätigung gelöst werden, so dass die Kupplungsteile voneinander getrennt werden können.

6. Kupplung nach einem der Ansprüche 1 bis 5, **dadurch gekennzeichnet, dass** das fahrzeugseitige Kupplungsteil axial zur Achse einer Radnabe oder parallel hierzu anzuordnen ist, wobei vorzugsweise die Buchse oder der Bolzen in Richtung ihrer/seiner Längsachse eine Bohrung mit einem Gewinde aufweist, mit dem sie/er auf das Ende der Radnabe oder einer am Fahrzeug gelagerten Verbindungsschraube aufgeschraubt werden kann und insbesondere gleichzeitig die Funktion einer Radmutter erfüllt.

7. Kupplung nach Anspruch 6, **dadurch gekennzeichnet, dass** der auf die Radnabe aufzuschraubende Kupplungsteil gleichzeitig die Funktion einer Achsmutter erfüllt.

8. Kupplung nach einem der vorstehenden Ansprüche, **dadurch gekennzeichnet, dass** das fahrzeugseitige Kupplungsteil der Bolzen (1, 24) ist, welcher an seinem zum Fahrzeug weisenden Ende einen Ansatz als Abstandshalter aufweist, der vorzugsweise zylindrisch ausgebildet ist.

9. Kupplung nach einem der vorstehenden Ansprüche, **dadurch gekennzeichnet, dass** der Bolzen im Wesentlichen zylindrisch ist und mindestens zwei jeweils zu einander parallele und in den Zylinder eingearbeitete Flächen zum Ansetzen eines Werkzeuges aufweist.

10. Kupplung nach einem der vorstehenden Ansprüche, **gekennzeichnet durch** ein mit der Buchse verbundenes und insbesondere daran angeordnetes erstes Drehgelenk, dessen Drehachse im Wesentlichen orthogonal zur Längsachse des Bolzens verläuft, wobei die Drehachse des ersten Drehgelenks vorzugsweise die Längsachse des Bolzens schneidet.

11. Kupplung nach Anspruch 10, **gekennzeichnet durch** ein weiteres mit der Buchse verbundenes, insbesondere am ersten Drehgelenk angrenzendes zweites Drehgelenk, dessen Drehachse orthogonal zu der des ersten Drehgelenks und der Längsachse des Bolzens verläuft.

12. Kupplung nach einem der vorstehenden Ansprüche, **gekennzeichnet durch** ein quer zur Längsachse der Kupplungsteile angeordnetes elastisches Verbindungselement zwischen Deichsel und deichselseitigem Kupplungsteil, insbesondere eine Spiralfeder und/oder ein Elastomergelenk.

13. Kupplung nach einem der Ansprüche 10 bis 12, **gekennzeichnet durch** ein Gehäuse (3), in das die Buchse (2, 25) eingesetzt ist und an dem das erste Drehgelenk und/oder das Verbindungselement ausgebildet ist/sind.

14. Kupplung nach einem der vorstehenden Ansprüche, **gekennzeichnet durch** ein abschließbares Schloss (38) als Verriegelungsmittel oder zum Blockieren des Entriegelungsmittels.

15. System aus Fahrzeug und einem eine Deichsel aufweisenden Fahrzeuganhänger mit einer Kupplung zur Verbindung der Deichsel mit dem Fahrzeug gemäß einem der vorstehenden Ansprüche.

## Claims

1. Coupling for connecting a two-track trailer which features at least one drawbar to a non-motorised vehicle or to a vehicle which has merely an auxiliary drive, in particular to a bicycle, having two interacting coupling parts which can be released from one another and of which one is connected in a positionally fixed manner to the vehicle and the other is connected to the drawbar, and of which one is a bolt (1, 24) with a cylindrical shell surface and the other one is a bushing (2, 25) or bolt guide which can be attached to the bolt (1, 24) and which at least partially encompasses the bolt (1, 24), wherein the bolt features at least one at least partially circumferential groove (7, 29), which forms at least one first axially acting bearing surface, the bushing (2, 25) or bolt guide features at least one opening for the insertion of the bolt (1, 24) and the coupling parts, which are connected to one another, are rotatable relative to one another around the longitudinal axis of the bolt and operate as a rotary joint with one degree of freedom, wherein the coupling parts feature locking means, with which the coupling parts can be securely connected to one another, and wherein, on the drawbar side, one or more further joints are provided, by which the coupling has imparted to it at least two further degrees of freedom, **characterised by** a duct in the bushing for a locking pin (8), such that the locking pin (8) located in the duct intervenes in the groove (7) of the bolt (1) inserted into the bushing (2), and, as a counter bearing, secures it against slipping out axially from the bushing.

2. Coupling according to Claim 1, **characterised in that** the locking pin (8) forms at least two axially operating counter bearing surfaces and inhibits the movement of the bolt in the bushing in both axial directions.

3. Coupling according to Claim 1 or 2, **characterised in that**, at its end (28) to be pushed into the bushing (25), the bolt (24) is tapered, in particular at an angle of approximately 45°.

4. Coupling according to one of Claims 1 to 3, **characterised in that** the locking means feature a pre-stressed catch element on the bushing side, which is released as soon as the bolt is inserted into the bushing.

5. Coupling according to Claim 4, **characterized in that** unlocking means are provided in order to unlock the locking means, so that the coupling parts can be detached from one another, wherein preferably the unlocking means feature at least one actuator button (35) with which the locking means, which automatically lock in place, can be detached, in particular by means of a single operation, so that the coupling parts can be separated from each other.

6. Coupling according to one of Claims 1 to 5, **characterised in that** the vehicle-side coupling part is to be arranged axially to the axle of a wheel hub or parallel thereto, wherein preferably the bushing (2) or the bolt (1) features a drill hole with a thread in the direction of its longitudinal axis, with which it can be screwed onto the end of the wheel hub or onto the connecting bolt and even more preferred simultaneously performs the role of a lug nut.

7. Coupling according to claim 6, **characterised in that** the coupling part to be screwed onto the wheel hub simultaneously performs the role of an axle nut.

8. Coupling according to one of the preceding claims, **characterised in that** the vehicle-side coupling part is the bolt (1, 24), which features a projection as a spacer at its end pointing towards the vehicle, which preferably has a cylindrical form.

9. Coupling according to one of the preceding claims, **characterised in that** the bolt is primarily cylindrical and features at least two surfaces parallel to one another and incorporated into the cylinder for the attachment of a tool.

10. Coupling according to one of the preceding claims, **characterised by** a first rotary joint connected to the bushing and in particular positioned thereon, the rotation axis of which runs essentially orthogonally to the longitudinal axis of the bolt, wherein the rotation axis of the first rotary joint preferably intersects the longitudinal axis of the bolt.

11. Coupling according to Claim 10, **characterised by** a further second rotary joint connected to the bushing, in particular adjacent to the first rotary joint, the rotation axis of which runs orthogonally to that of the first rotary joint and the longitudinal axis of the bolt.

12. Coupling according to one of the preceding claims, **characterised by** an elastic connecting element arranged transverse to the longitudinal axis of the coupling parts between the drawbar and the drawbar-side coupling part, in particular a coil spring and/or an elastomer joint.

13. Coupling according to one of the Claims 10 to 12, **characterised by** a casing (3) into which the bushing (2, 25) is inserted, and on which the first rotary joint and/or the connecting element is configured.

14. Coupling according to one of the preceding claims, **characterised by** a lockable lock (38) as a locking means or to obstruct the unlocking means.

15. System of a vehicle and a vehicle trailer featuring one drawbar with a coupling to connect the drawbar to the vehicle according to one of the preceding claims.

## Revendications

1. Attelage destiné à relier une remorque à deux roues sur essieu comprenant au moins un timon à un véhicule non motorisé ou à un véhicule présentant seulement un entraînement auxiliaire, en particulier une bicyclette, ledit attelage comprenant deux parties d'attelage entrant en coopération et pouvant être détachées l'une de l'autre, parmi lesquelles l'une est à fixer à demeure au véhicule et l'autre à relier au timon, et parmi lesquelles l'une est un boulon (1, 24) présentant une surface cylindrique et l'autre une douille (2, 25) ou un guidage de boulon pouvant être enfiché (e) sur le boulon (1, 24) et entourant au moins en partie le boulon (1, 24), dans lequel le boulon présente au moins une rainure (7, 29) au moins en partie périphérique, qui forme au moins une première surface d'appui agissant axialement, un contre-appui coopérant avec la première surface d'appui agissant axialement est prévu sur la douille (2, 25) ou le guidage de boulon, la douille (2, 25) ou le guidage de boulon présente au moins une ouverture pour l'insertion du boulon (1, 24) et les parties d'attelage reliées l'une à l'autre peuvent être amenées à tourner l'une par rapport à l'autre autour de l'axe longitudinal du boulon et agissent comme une articulation rotoïde présentant un degré de liberté, dans lequel les parties d'attelage comportent des moyens de verrouillage par l'intermédiaire desquels les parties d'attelage peuvent être reliées solidement l'une à l'autre, et dans lequel un ou plusieurs autres moyens d'articulation sont prévus côté timon, par l'intermédiaire desquels l'attelage reçoit au moins un autre degré de liberté, **caractérisé par** un guidage dans la douille (2, 25) pour une broche de blocage (8), de telle manière que la broche de blocage (8) reposant dans le guidage s'engage dans la rainure (7) du boulon (1) inséré dans la douille (2) et bloque ce dernier en tant que contre-appui pour l'empêcher de s'extraire axialement de la douille en glissant.

2. Attelage selon la revendication 1, **caractérisé en ce que** la broche de blocage (8) forme au moins deux surfaces de contre-appui agissant axialement et empêche un déplacement du boulon dans la douille dans les deux directions axiales.

3. Attelage selon la revendication 1 ou 2, **caractérisé en ce que** le boulon (24) s'amincit à son extrémité (28) à introduire dans la douille (25) en particulier selon un angle de sensiblement 45°.

4. Attelage selon l'une quelconque des revendications 1 à 3, **caractérisé en ce que** les moyens de verrouillage présentent côté douille un élément d'encliquetage précontraint, qui est déclenché dès que le boulon est inséré dans la douille.

5. Attelage selon la revendication 4, **caractérisé en ce que** des moyens de déverrouillage sont prévus afin de déverrouiller les moyens de verrouillage, de sorte que les parties d'attelage peuvent être détachées l'une de l'autre, dans lequel les moyens de verrouillage présentent de préférence au moins une tête d'actionnement par l'intermédiaire de laquelle les moyens de verrouillage encliquetés sont détachés en particulier à la suite d'un seul actionnement, de sorte que les parties d'attelage peuvent être séparés les uns des autres.

6. Attelage selon l'une quelconque des revendications 1 à 5, **caractérisé en ce que** la partie d'attelage côté véhicule est à agencer axialement par rapport à l'axe d'un moyeu de roue ou parallèlement à celle-ci, dans lequel la douille ou le boulon présente de préférence en direction de son axe longitudinal un trou pourvu d'un filet, filet au moyen duquel elle/il peut être vissé(e) sur l'extrémité du moyeu de roue ou d'une vis d'assemblage montée sur le véhicule et assure en particulier simultanément la fonction d'un écrou de roue.

7. Attelage selon la revendication 6, **caractérisé en ce que** la partie d'attelage à visser sur le moyeu de roue assure simultanément la fonction d'un écrou d'essieu.

8. Attelage selon l'une quelconque des revendications précédentes, **caractérisé en ce que** la partie d'attelage côté véhicule est le boulon (1, 24), lequel présente à son extrémité tournée vers le véhicule une partie saillante faisant office d'élément d'écartement, laquelle est de préférence cylindrique.

9. Attelage selon l'une quelconque des revendications précédentes, **caractérisé en ce que** le boulon est sensiblement cylindrique et présente au moins deux surfaces respectivement parallèles l'une à l'autre et ménagées dans le cylindre pour la mise en place d'un outil.

10. Attelage selon l'une quelconque des revendications précédentes, **caractérisé par** une première articulation rotoïde reliée à la douille et agencée en particulier sur celle-ci, dont l'axe de rotation s'étend sensiblement perpendiculairement à l'axe longitudinal du boulon, dans lequel l'axe de rotation de la première articulation rotoïde coupe de préférence l'axe longitudinal du boulon.

11. Attelage selon la revendication 10, **caractérisé par** une autre deuxième articulation rotoïde qui est reliée à la douille et en particulier adjacente à la première articulation rotoïde et dont l'axe de rotation s'étend perpendiculairement à celui de la première articulation rotoïde et de l'axe longitudinal du boulon.

12. Attelage selon l'une quelconque des revendications précédentes, **caractérisé par** un élément de liaison élastique agencé transversalement à l'axe longitudinal des parties d'attelage entre le timon et la partie d'attelage côté timon, en particulier un ressort spiral et/ou une articulation élastomère.

13. Attelage selon l'une quelconque des revendications 10 à 12, **caractérisé par** un logement (3), dans lequel la douille (2, 25) est insérée et sur lequel la première articulation rotoïde et/ou l'élément de liaison est/sont formés.

14. Attelage selon l'une quelconque des revendications précédentes, **caractérisé par** une serrure (38) pouvant être fermée faisant office de moyen de verrouillage ou destinée au blocage du moyen de verrouillage.

15. Système composé d'un véhicule et d'une remorque de véhicule présentant un timon, laquelle remorque est pourvue d'un attelage pour la liaison du timon au véhicule selon l'une quelconque des revendications précédentes.
